(19) Europäisches Patentamt
European Patent Office
Office européen des brevets

(11) **EP 3 474 213 A1**

(12) **EUROPEAN PATENT APPLICATION**
published in accordance with Art. 153(4) EPC

(43) Date of publication:
**24.04.2019 Bulletin 2019/17**

(51) Int Cl.:
*G06Q 30/02* (2012.01)      *G06Q 50/10* (2012.01)
*G06Q 10/06* (2012.01)

(21) Application number: **17813144.7**

(22) Date of filing: **01.06.2017**

(86) International application number:
**PCT/JP2017/020397**

(87) International publication number:
**WO 2017/217242 (21.12.2017 Gazette 2017/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.06.2016 JP 2016118579**

(71) Applicant: **Sony Corporation Tokyo 108-0075 (JP)**

(72) Inventors:
• **FUJITA Takuya**
  **Tokyo 108-0075 (JP)**
• **NAKAMURA Akira**
  **Tokyo 108-0075 (JP)**
• **NARIHIRA Takuya**
  **Tokyo 108-0075 (JP)**

(74) Representative: **MFG Patentanwälte Meyer-Wildhagen Meggle-Freund Gerhard PartG mbB Amalienstraße 62 80799 München (DE)**

(54) **INFORMATION PROCESSING DEVICE, INFORMATION PROCESSING METHOD, AND PROGRAM**

(57)    The present technology relates to an information processing device, an information processing method, and a program for enabling the value of an achievement of a task to be estimated.

An information processing device includes: an estimating unit that estimates an achievement value which is a value of an achievement of a task on the basis of achievement information which is information associated with the achievement of the task. The present technology can be applied to an information processing device such as a server and a client, for example. Examples of such an information processing device includes a portable information terminal such as a smartphone, a tablet, or a mobile phone, a computer, a wearable device, and the like.

*FIG. 3*

**Description**

TECHNICAL FIELD

The present technology relates to an information processing device, an information processing method, and a program, and particularly, to an information processing device, an information processing method, and a program suitable for use in the case of estimating the value of an achievement of a task.

BACKGROUND ART

Conventionally, a technique of estimating the time required for welding a part having a given weight on the basis of an actual time required for an operator to perform welding in the past and a skill level of the operator at the present time point has been proposed (for example, see Patent Document 1) .

CITATION LIST

PATENT DOCUMENT

Patent Document 1: Japanese Patent Application Laid-Open No. 2010-86928

SUMMARY OF THE INVENTION

PROBLEMS TO BE SOLVED BY THE INVENTION

However, the invention disclosed in Patent Document 1 does not discuss estimation of the value of welding which is an achievement of a task, for example.
Therefore, the present technology enables the value of an achievement of a task to be estimated.

SOLUTION TO PROBLEMS

An information processing device of an aspect of the present technology includes: an estimating unit that estimates an achievement value which is a value of an achievement of a task on the basis of achievement information which is information associated with the achievement of the task.
The estimating unit may be allowed to estimate the achievement value on the basis of at least one of an achievement feature amount including a feature amount of a definition of an achievement, a sample feature amount including a feature amount of a sample related to a specific achievement, or an achievement state feature amount including a feature amount of an achievement state which is a state in which an achievement is placed.
The sample feature amount may be allowed to include at least one of a feature amount of a task processing target which is a processing target of the task or a feature amount of a specific achievement of the task.
The estimating unit may be allowed to use a model for estimating the achievement value on the basis of at least one of the achievement feature amount, the sample feature amount, or the achievement state feature amount.
A learning unit that performs learning of the model may further be provided.
The learning unit may be allowed to perform learning of the model using the achievement feature amount corresponding to each of achievements obtained from record data of the achievement value in each of the achievement states of each achievement and the achievement state feature amount corresponding to each of the achievement state.
The learning unit may be allowed to perform learning of the model using the achievement feature amount corresponding to each of achievements obtained from record data of the achievement value of each of achievements for each of the samples and the sample feature amount corresponding to each of the samples.
A feature amount extracting unit that extracts at least one of the achievement feature amount, the sample feature amount, or the achievement state feature amount may further be provided.
The estimating unit may be allowed to estimate the achievement value of a third achievement which is a difference between a first achievement and a second achievement by a difference between the achievement value of the first achievement and the achievement value of the second achievement.
The achievement may be one of or a combination of two or more of a label, a comparison result, a listing result, an evaluation result, a retrieval result, a reply, an answer, an arrangement result, a conversion result, a summary result, an association result, an inference result, a generation result, a suggestion result, a plan, a design specification, a test result, and an object.
An information processing method of an aspect of the present technology includes: an estimation step of allowing an information processing device to estimate an achievement value which is a value of an achievement of a task on the basis of achievement information which is information associated with an achievement of the task.

A program of an aspect of the present technology causes a computer to execute a process including: an estimation step of estimating an achievement value which is a value of an achievement of a task on the basis of achievement information which is information associated with an achievement of the task.

In an aspect of the present technology, an achievement value which is a value of an achievement of a task is estimated on the basis of achievement information which is information associated with the achievement of the task.

EFFECTS OF THE INVENTION

According to an aspect of the present technology, it is possible to estimate the value of an achievement of a task.

Note that the effects described herein are not necessarily limited thereto and may also be any of those described in the present technology.

BRIEF DESCRIPTION OF DRAWINGS

Fig. 1 is a block diagram illustrating an embodiment of an information processing system to which the present technology is applied.

Fig. 2 is a block diagram illustrating a configuration example of a server.

Fig. 3 is a block diagram illustrating a configuration example of functions realized by a CPU of a server.

Fig. 4 is a flowchart for describing an achievement value estimation model learning process.

Fig. 5 is a flowchart for describing an achievement value estimation process.

Fig. 6 is an example of a screen for recruiting cloud sourcing operators.

MODE FOR CARRYING OUT THE INVENTION

Hereinafter, a mode (hereinafter referred to as an "embodiment") for carrying out the invention will be described in detail with reference to the drawings. Note that the description will be given in the following order.

1. Embodiment
2. Application example
3. Modification and the like

<<1.Embodiment>>

<1-1. Configuration example of information processing system 1>

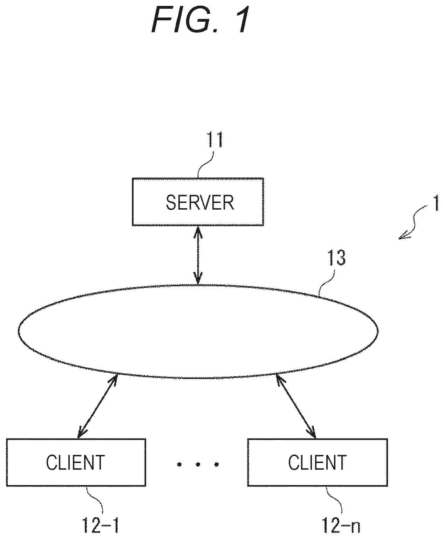

Fig. 1 illustrates an embodiment of an information processing system 1 to which the present technology is applied.

The information processing system 1 includes a server 11 and clients 12-1 to 12-n. The server 11 and the clients 12-1 to 12-n are connected to each other via a network 13 and communicate with each other. A communication scheme of the server 11 and the client 12-1 to 12-n may employ an arbitrary communication scheme regardless of whether the scheme is a cable or radio communication scheme.

The server 11 performs learning on a model (hereinafter referred to as a task execution model) for executing various tasks to generate a task execution model. Moreover, the server 11 executes various tasks using the task execution model to present an obtained achievement and to provide the achievement to users who use the clients 12-1 to 12-n.

The clients 12-1 to 12-n are used for using the achievement of the tasks provided by the server 11, for example. For example, the clients 12-1 to 12-n are configured as a portable information terminal such as a smartphone, a tablet, a mobile phone, or a note-type personal computer, a desktop-type personal computer, a game console, a video player, a music player, and the like. Moreover, for example, the clients 12-1 to 12-n are configured as various wearable devices such as a glasses-type device, a wrist watch-type device, a bracelet-type device, a necklace-type device, a neckband-type device, an earphone-type device, a headset-type device, or a head mounted-type device.

Note that, hereinafter, the clients 12-1 to 12-n will be referred to simply as a client 12 in a case where it is not necessary to distinguish individual clients.

<1-2. Configuration example of server 11>

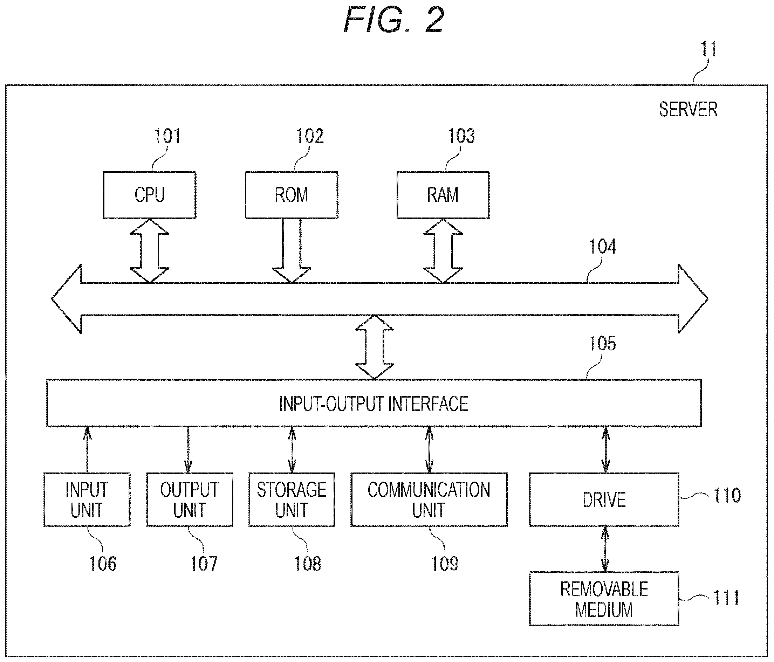

Fig. 2 illustrates a configuration example of the server 11.

In the server 11, a central processing unit (CPU) 101, a read only memory (ROM) 102, and a random access memory (RAM) 103 are connected to each other by a bus 104. Further, an input-output interface 105 is connected to the bus 104. An input unit 106, an output unit 107, a storage unit 108, a communication unit 109, and a drive 110 are connected to the input-output interface 105.

The input unit 106 is configured, for example, as an input device such as a keyboard, a mouse, and a microphone.

The output unit 107 is configured, for example, as a display, a speaker, and the like.

The storage unit 108 is configured, for example, as a hard disk, a nonvolatile memory, or the like.

The communication unit 109 is configured, for example, as a cable or radio communication device, a network interface, and the like. The communication unit 109 may employ an arbitrary communication scheme and may employ a plurality of communication schemes.

The drive 110 drives a removable medium 111 such as, for example, a magnetic disk, an optical disc, an opto-magnetic disk, or a semiconductor memory.

In the server 11, for example, the CPU 101 loads a program stored in the storage unit 108 onto the RAM 103 via the input-output interface 105 and the bus 104 and execute the program, whereby a series of processes are performed.

The program executed by the server 11 (the CPU 101) can be provided by being recorded on the removable medium 111 as a package medium or the like, for example. Moreover, the program can be provided via a cable or radio transmission medium such as a local area network, the Internet, or a digital satellite broadcasting.

In the server 11, the program can be installed on the storage unit 108 via the input-output interface 105 by mounting the removable medium 111 on the drive 110. Moreover, the program can be received by the communication unit 109 and be installed on the storage unit 108 via a cable or radio transmission medium. Besides this, the program can be installed in advance on the ROM 102 or the storage unit 108.

Note that, in the following description, in a case where respective units of the server 11 transmit and receive information or the like via the bus 104 or the input-output interface 105, the bus 104 and the input-output interface 105 will not be mentioned. For example, in a case where the communication unit 109 supplies reception data to the CPU 101 via the bus 104 and the input-output interface 105, it will be expressed that the communication unit 109 supplies reception data to the CPU 101 without mentioning the bus 104 and the input-output interface 105.

<1-3. Configuration example of functions of server 11>

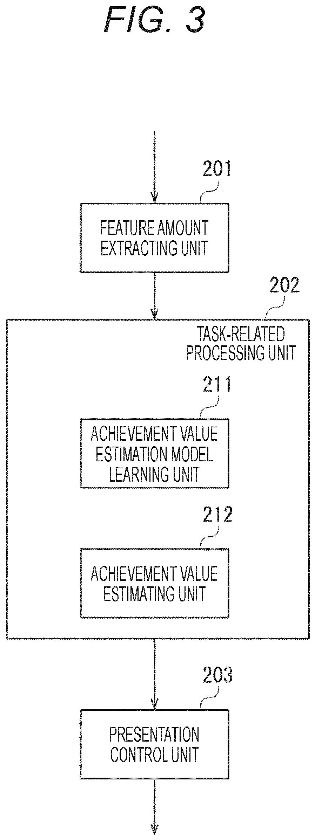

Fig. 3 is a block diagram illustrating a configuration example of functions related to the present technology among the functions realized by the CPU 101 of the server 11. The CPU 101 executes a predetermined control program whereby functions including a feature amount extracting unit 201, a task-related processing unit 202, and a presentation control unit 203 are realized. Moreover, the task-related processing unit 202 includes an achievement value estimation model learning unit 211 and an achievement value estimating unit 212.

The feature amount extracting unit 201 extracts a feature amount of given data. For example, the feature amount extracting unit 201 extracts a feature amount of a definition of an achievement of a task, a feature amount of a sample related to a specific achievement of a task, and a feature amount of a state (hereinafter referred to as an achievement state) in which an achievement is placed. The feature amount extracting unit 201 supplies a feature amount extraction result to the task-related processing unit 202 and stores the feature amount extraction result in the RAM 103 or the storage unit 108.

The achievement value estimation model learning unit 211 performs learning on an achievement value estimation model. Here, an achievement value estimation model is a model that estimates an achievement value which is the value of an achievement of a task and is one type of a task execution model that executes a task of estimating an achievement value. The achievement value estimation model learning unit 211 supplies information associated with the achievement value estimation model obtained as the result of the learning to the presentation control unit 203 and stores the information in the RAM 103 or the storage unit 108.

The achievement value estimating unit 212 performs estimation of an achievement value on the basis of achievement information which is information associated with an achievement using the achievement value estimation model generated by the achievement value estimation model learning unit 211. The achievement value estimating unit 212 supplies the achievement value estimation result to the presentation control unit 203 and the respective units of the task-related processing unit 202 and stores the achievement value estimation result in the RAM 103 or the storage unit 108.

The presentation control unit 203 controls presentation of various items of information in the output unit 107 and the client 12. For example, the presentation control unit 203 controls presentation of a task achievement, an achievement value, and the like in the output unit 107 and the client 12.

<1-4. Example of achievement of task>

Next, an example of an achievement of a task of which the achievement value is to be estimated using the achievement value estimation model will be described.

Here, an achievement of a task is one obtained by executing a task (that is, an execution result of the task) and is represented by the following equation (1), for example.

```
Achievement of task = State after executing task – State before
executing task = Output of task – Input of task ... (1)
```

The input of a task is a processing target (hereinafter referred to as a task processing target) of a task, for example, and is not necessary present.

The output of a task may or may not be identical to an achievement of the task. In the latter case, the output of a task is one obtained by applying an achievement of a task to a task processing target, for example, and is a final product of the task, for example.

For example, in the case of executing a task of "drawing a picture of a bird", the input of the task is not present, and the output of the task is the "picture of a bird" and an achievement of the task is the "picture of a bird" . In this case, the output of a task is identical to the achievement.

On the other hand, in the case of executing a task of "appending a bird label indicating whether a bird is photographed in an image or not", a processing target of the task is an "image" and is the input of the task. The output of the task is an "image to which a bird label is appended", and an achievement of the task is a "bird label". In this case, the output of the task is not identical to the achievement.

Moreover, an achievement of a task to which the achievement value estimation model can be applied is not particularly limited. Hereinafter, the types of achievement of a task to which the achievement value estimation model can be applied will be described.

a) Label

"Label" is an achievement of "labeling" which is a task of appending a label to a task processing target according to conditions, for example. For example, the following examples correspond to "label".

Two-class label indicating whether image is "bird image" or "not bird image".
Label indicating "area where bird is photographed" in image
Category label indicating "category" of website
Five-grade label indicating subjective good points of picture
Five-grade label indicating subjective good points of idea of novel
Label indicating urgency level or importance level of inquiry or demand from customer
Label indicating whether information "corresponds to personal information"
Label indicating "region which requires age restrictions" of image
Label indicating whether an English-Japanese translation is "natural Japanese". Note that this label is assigned for the purpose of checking a translation task, for example.

b) Comparison result

"Comparison result" is an achievement of "comparison" which is a task of comparing a plurality of task processing targets, for example . For example, the following examples correspond to "comparison result".

Comparison result indicating whether same person is photographed in two pictures
Comparison result indicating which one of two advertising phrases is better
Comparison result indicating which one of two songs is more relaxing

c) Listing result

"Listing result" is an achievement of "listing" which is a task of listing objects, items of information, and the like satisfying conditions, for example. For example, the following examples correspond to "listing result".

List of text under conditions that "what would you tell audio agent when you want to see schedule table?"
List of items under conditions of "ideas for present for wife or husband"
List of ideas under conditions of "advertising phrase for product"
List of ideas under conditions of "ideas for hanging out at the sea"

List of song titles under conditions of "representative song of artist A"

d) Evaluation result

"Evaluation result" is an achievement of "evaluation" which is a task of evaluating a task processing target, for example. For example, the following example corresponds to "evaluation result".
Evaluation result on "how much text transcription from image is correct"

e) Retrieval result

"Retrieval result" is an achievement of "retrieval" which is a task of retrieving objects, items of information, or the like satisfying conditions, for example. For example, the following examples correspond to "retrieval result".
Retrieval result of "web pages related to deep-learning"
Retrieval result of "EC sites from which one can purchase cheapest camera A"
Retrieval result of "venture companies related to emails"
Retrieval result of "image processing services on web"

f) Reply / Answer

"Reply" and "Answer" is an achievement of "reply / answer" which is a task of replying to an inquiry and answering to a question, for example. For example, the following examples correspond to "reply" or "answer".
Reply to "what is deep-learning"
Answer to questions related to subjects such as mathematics, Japanese, English, social studies, and science
Hint for questions related to subjects such as mathematics, Japanese, English, social studies, and science

g) Arrangement result

"Arrangement result" is an achievement of "arrangement" which is a task of arranging task processing targets, for example. For example, the following examples correspond to "arrangement result".
Image arrangement result
ToDo arrangement result

h) Conversion result / Summary result

"Conversion result" and "summary result" is an achievement of "conversion / summary" which is a task of converting or summarizing a task processing target, for example. For example, the following examples correspond to "conversion / summary"
Title of image
Character text photographed in image
Transcription result of purchased product and price written in receipt
Japanese-English translation result
Rewriting of Japanese sentence into simpler Japanese sentence
Summary result of books

i) Association result / Inference result

"Association result" and "inference result" is an achievement of "association / inference" which is a task of performing association or inference, for example. For example, the following examples correspond to "association result" or "inference result".

Calculation result for B of A

Calculation result for "D of C if A is B" (for example, calculation result for "a part of a bird corresponding to scales of a fish")
Calculation result of relation C between A and B (for example, calculation result for "relation between fish and mackerel pike")

j) Generation result

"Generation result" is an achievement of "generation" which is a task of generating objects, information, and the like, for example. For example, the following examples correspond to "generation result".

Illustration of bird
Email for politely declining invitation to meeting
Picture of place A
Picture of bird
Sound in place B

k) Suggestion result

"Suggestion result" is an achievement of "suggestion" which is a task of presenting suggestion for objects, information, and the like, for example. For example, the following examples correspond to "suggestion result".

Suggestion result for "good tourist spots for trip to Hokkaido
Suggestion result for "optimum BGM for work

1) Plan

"Plan" is an achievement of "planning" which is a task of make a plan, for example. For example, the following example corresponds to "plan".

Plan for hanging out at the sea

m) Design specification

"Design specification" is an achievement of "designing" which is a task of creating a design, for example. For example, the following example corresponds to "design specification".

Design specification of "box capable of conveying fragile object easily"

n) Test result

"Test result" is an achievement of "testing" which is a task of performing testing, for example. For example, the following examples correspond to "test result".

Picture obtained by imaging region ranging from place A to place Z with camera under development
Reviews after using service under trial

o) Object

"Object" is an achievement of "acquisition" which is a task of acquiring objects satisfying conditions, for example. "Acquisition" also includes the above-described task of "generation" or the like, for example. For example, the following examples correspond to "object".

Black ball point pen
Gold (Au)
Solar cell-type 12-digit calculator

p) Others

The above-described types of achievement are examples only, and besides these, the following achievements may be used.

Execution result of reservation for tickets or the like
Recorded information

Note that the respective types of achievements are not necessarily clearly divided, but an achievement that belongs to a plurality of types and an achievement corresponding to a combination of a plurality of types are also present.

Next, an example of an achievement expression method will be described. Examples of an achievement expression method include a single-label expression, a multi-label expression, and a natural sentence expression.

A single-label expression expresses respective achievements using different labels (feature amounts), respectively. For example, three types of achievements including "bird label for image", "flower label for image", and "person label for image" are expressed by different labels (feature amounts) of "bird label for image", "flower label for image", and "person label for image", respectively. Note that the respective labels are not necessarily expressed by natural sentences but may be expressed by IDs or the like capable of identifying respective labels. Moreover, in a case where the single-label expression is used, feature amount vectors for identifying these three types of achievements are vectors including three-dimensional feature amounts corresponding to "bird label for image", "flower label for image", and "person label for image", respectively, for example.

A multi-label expression expresses respective achievements using a combination of one or more labels (feature amounts). For example, three types of achievements including "bird label for image", "flower label for image", and "person label for image" are expressed by a combination of four types of labels of "image", "bird label", "flower label", and "person label" . Note that the respective labels are not necessarily expressed by natural sentences but may be expressed by IDs or the like capable of identifying respective labels. Moreover, in a case where the multi-label expression is used, feature amount vectors for identifying these three types of achievements are vectors including four-dimensional feature amounts corresponding to "image", "bird label", "flower label", and "person label", for example, respectively.

A natural sentence expression expresses achievements using natural sentences. For example, in the natural sentence expression, an achievement of "bird label for image" is expressed by a natural sentence of "bird label for image".

Note that the respective expression methods can be converted and combined mutually.

<1-5. Achievement value estimation model learning process>

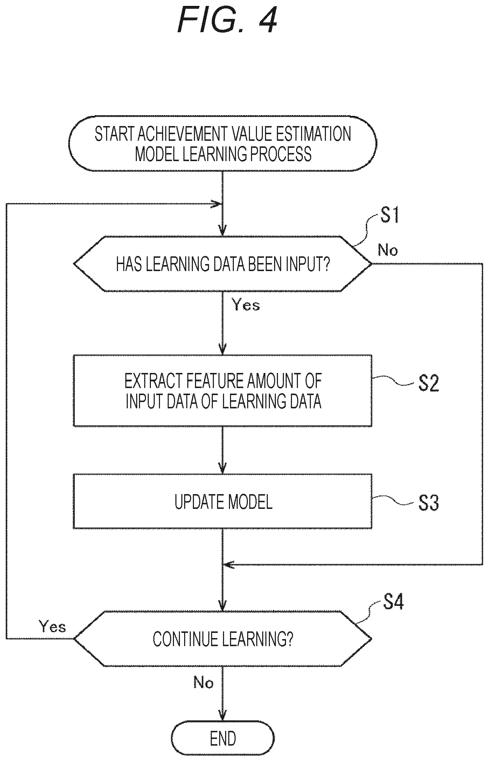

Next, an achievement value estimation model learning process executed by the server 11 will be described with reference to the flowchart of Fig. 4.

As described above, an achievement value estimation model is a model for estimating an achievement value of a task. For example, an achievement value estimation model is expressed by a function f1 of the following equation (2) .

$$y = f1(x1,x2,x3) \ldots (2)$$

x1 indicates a vector (hereinafter referred to as an achievement vector) including a feature amount of a definition of an achievement of a task. For example, sentences indicating individual achievements exemplified in the above-described types of achievements of tasks correspond to definitions of tasks.

x2 indicates a vector (hereinafter referred to as a sample vector) including feature amounts of a sample related to a specific achievement (hereinafter referred to as a specific achievement) obtained by actually executing a task. A sample includes, for example, at least one of an actual processing target (task processing target) of a task or a specific achievement of a task. For example, a sample for a task of "appending a bird label indicating whether a bird is photographed in an image or not" includes at least one of an image which is a task processing target or a bird label which is a specific achievement. Moreover, for example, a sample for a task of "drawing a picture of a bird" includes the picture of a bird which is a specific achievement since a task processing target is not present. Therefore, a sample vector includes, for example, at least one of a feature amount of a task processing target or a feature amount of a specific achievement.

x3 indicates a vector (hereinafter referred to as an achievement state vector) including feature amounts of an achievement state which is a state where an achievement is placed.

The achievement state may have an influence on an achievement value. For example, in a case where an achievement is "water", the achievement value is different largely depending on whether the place where "water" is present is "desert" or "river". The achievement state includes, for example, supply and scarcity, demand, precondition, and the like.

Supply and scarcity indicates the number of similar achievements present. The higher the supply and scarcity of an achievement (that is, the smaller the number of similar achievements), the higher becomes the achievement value. The lower the supply and scarcity of an achievement (that is, the larger the number of similar achievements), the lower becomes the achievement value.

Demand indicates how much an achievement is demanded. The higher the demand for an achievement, the higher becomes the achievement value. The lower the demand for an achievement, the lower becomes the achievement value.

The precondition indicates how many objects serving as precondition of an achievement, for example, have been supplied. For example, the smaller the supply amount (supply source) of objects serving as precondition of an achievement, the lower becomes the achievement value. The larger the supply amount (supply source) of objects serving as precondition of an achievement, the higher becomes the achievement value. This is because, in a case where the supply amount (supply source) of objects serving as precondition is small (that is, the objects are monopolized or oligopolies), if the achievement value of a task is constant, a supplier of the objects serving as precondition may take a large portion of the supply. In contrast, in a case where the supply amount (supply source) is large, since a plurality of supply sources can negotiate with each other, the achievement value increases (more accurately, the achievement value does not decrease).

Note that the achievement state is not limited to the above-described examples as long as the achievement state is a state where an achievement may be placed.

y indicates an achievement value. The achievement value is expressed by an amount of money such as, for example, a price, a cost, a rate, a value, or a reward. The higher the achievement value, the larger becomes the amount of money. The lower the achievement value, the smaller becomes the amount of money.

Therefore, the function f1 is a model that estimates an achievement value of an achievement expressed by the achievement vector x1 in a case where a sample expressed by the sample vector x2 is obtained in an achievement state expressed by the achievement state vector x3, for example . For example, the function f1 is used in the case of estimating a specific achievement value of an arbitrary type of achievement by taking an achievement state into consideration.

Here, a specific achievement value is an achievement value that reflects the value of a specific achievement obtained by actually executing a task, for example. For example, a specific achievement value of a task of "drawing a picture of a bird" is an achievement value that reflects the value of individual "bird pictures" drawn actually and is different for respective individual "bird pictures".

Note that the input data of the achievement value estimation model may not necessarily use all of the achievement vector x1, the sample vector x2, and the achievement state vector x3 and may use one or two vectors only as necessary. The following equations (3) to (8) illustrate examples of an achievement value estimation model in which one or two of the achievement vector x1, the sample vector x2, and the achievement state vector x3 are used as its input data.

$$y = f2(x1) \ ... \ (3)$$

A function f2 is an achievement value estimation model which uses the achievement vector x1 only as its input data. For example, the function f2 is used in the case of estimating a general achievement value of an arbitrary type of achievement without taking an achievement state into consideration.

Here, a general achievement value is a general value of a target achievement, for example, and the value of a specific achievement obtained by actually executing a task is not taken into consideration. For example, a general achievement value of a task of "drawing a picture of a bird" indicates a general value of a "birdpicture" and does not reflect the values of individual "bird pictures" drawn actually.

$$y = f3(x2) \ ... \ (4)$$

A function f3 is an achievement value estimation model in which a target achievement is determined in advance (the achievement is fixed) and which uses the sample vector x2 only as its input data. For example, the function f3 is used in the case of estimating the specific achievement value of a predetermined type of value without taking the achievement state into consideration.

$$y = f4(x3) \ ... \ (5)$$

A function f4 is an achievement value estimation model in which an achievement is fixed and which uses the achievement state vector x3 only as its input data. For example, the function f4 is used in the case of estimating a general achievement value of a predetermined type of achievement by taking an achievement state into consideration.

$$y = f5(x1,x2) \ ... \ (6)$$

A function f5 is an achievement value estimation model which uses the achievement vector x1 and the sample vector x2 as its input data. For example, the function f5 is used in the case of estimating a specific achievement value of an arbitrary type of achievements without taking an achievement state into consideration.

$$y = f6(x1,x3) \dots (7)$$

A function f6 is an achievement value estimation model which uses the achievement vector x1 and the achievement state vector x3 as its input data. For example, the function f6 is used in the case of estimating a general achievement value of an arbitrary type of achievements by taking an achievement state into consideration.

$$y = f7(x2,x3) \dots (8)$$

A function f7 is an achievement value estimation model in which an achievement is fixed and which uses the sample vector x2 and the achievement state vector x3 as its input data. For example, the function f7 is used in the case of estimating a specific achievement value of a predetermined type of achievement by taking an achievement state into consideration.

Note that, hereinafter, the functions f1 to f7 will be referred to simply as a function f in a case where it is not necessary to distinguish the individual functions.

Returning to Fig. 4, in step S1, the feature amount extracting unit 201 determines whether learning data has been input or not. In a case where it is determined that learning data has been input, the process proceeds to step S2.

Here, learning data is data for learning an achievement value estimation model and includes input data and correct answer data indicating an achievement value for the input data. For example, the input data includes at least one of an achievement definition, a sample, or an achievement state (data indicating the same) . Note that the type of data included in the input data is different depending on which achievement value estimation model of the above-described functions f1 to f7 will be generated.

In step S2, the feature amount extracting unit 201 extracts a feature amount of input data of learning data.

Specifically, in a case where a definition of an achievement is included in the input data, the feature amount extracting unit 201 extracts the feature amount of the definition of the achievement according to the following method, for example.

In a case where the definition of an achievement is expressed in text data, the feature amount is extracted by a method such as Bag-of-Words (BoWs), N-gram, or recurrent neural network (RNN), for example.

Moreover, in a case where the definition of an achievement is expressed by a label, the label is used as the feature amount as it is, for example. In this case, the feature amount is expressed by 1-hot encoding, for example. Alternatively, for example, the label of the definition of an achievement is converted to a feature amount which uses an embedded expression.

Moreover, the feature amount extracting unit 201 generates an achievement vector including the extracted feature amount of the definition of an achievement.

Moreover, in a case where a sample is included in the input data, the feature amount extracting unit 201 extracts the feature amount of the sample by the following method, for example.

In a case where text data is included in the sample, the feature amount of the text data is extracted using a method such as BoWs, N-gram, or NN (particularly RNN), for example.

In a case where image data is included in the sample, a feature amount which uses NN (particularly, convolutional neural network (CNN)) or a feature amount such as histograms of oriented gradients (HOG), scale-invariant feature transform (SIFT), speeded up robust features (SURF), or Haar-Like, for example, is extracted from the image data.

In a case where audio data is included in the sample, a feature amount based on NN (particularly, multi-layer perceptron (MLP) or CNN) or a feature amount such as mel-frequency cepstrum coefficients, for example, is extracted from the audio data.

In a case where a feature amount based on haptics is extracted from a sample, a parameter indicating the surface roughness, for example, is extracted as a feature amount.

In a case where a feature amount based on gustatory sense is extracted from a sample, the concentration of a component related to taste is, for example, extracted as a feature amount.

In a case where a feature amount based on olfactory sense is extracted from a sample, the concentration of a component related to smell is, for example, extracted as a feature amount.

Moreover, the feature amount extracting unit 201 generates a sample vector including the extracted feature amount of the sample.

Moreover, in a case where an achievement state is included in the learning data, the feature amount extracting unit 201 extracts the feature amount of an achievement state.

In a case where text data is included in an achievement state, a feature amount of the text data is extracted using a method such as, for example, BoWs, N-gram, or NN (particularly RNN).

In a case where image data is included in the achievement state, a feature amount which uses NN (particularly, convolutional neural network (CNN)) or a feature amount such as histograms of oriented gradients (HOG), scale-invariant feature transform (SIFT), speeded up robust features (SURF), or Haar-Like, for example, is extracted from the image data.

In a case where audio data is included in the achievement state, a feature amount based on NN (particularly, MLP or CNN) or a feature amount such as mel-frequency cepstrum coefficients, for example, is extracted from the audio data.

Moreover, the feature amount extracting unit 201 generates an achievement state vector including the extracted feature amount of the achievement state.

The feature amount extracting unit 201 supplies the learning data including the generated respective feature amount vectors to the achievement value estimation model learning unit 211.

In step S3, the achievement value estimation model learning unit 211 updates the model. For example, the achievement value estimation model learning unit 211 updates the achievement value estimation model by performing machine learning of a predetermined method using the acquired learning data.

For example, the achievement value estimation model learning unit 211 updates the achievement value estimation model using regression analysis which uses the achievement vector, the sample vector, and the achievement state vector generated by arbitrary methods, respectively as independent variables and using a "value (reward) per label" as a dependent variable.

Moreover, for example, in a case where the achievement value is fixed to the "two-class label indicating whether image is "bird image" or "not bird image"", the achievement value estimation model learning unit 211 updates the achievement value estimation model using regression analysis which uses a sample vector including a feature amount vector of "image" as an independent variable and using the "value (reward) per label" as a dependent variable.

The achievement value estimation model learning unit 211 stores the information associated with the updated achievement value estimation model in the storage unit 108.

After that, the process proceeds to step S4.

On the other hand, in a case where it is determined in step S1 that the learning data is not input, the processes of steps S2 and S3 are skipped, and the process proceeds to step S4.

In step S4, the achievement value estimation model learning unit 211 determines whether learning will be continued or not. In a case where it is determined that learning will be continued, the process returns to step S1.

After that, the processes of steps S1 to S4 are executed repeatedly to learn the achievement value estimation model until it is determined in step S4 that learning is to be terminated.

On the other hand, in a case where a condition for terminating learning of the achievement value estimation model is satisfied in step S4, the achievement value estimation model learning unit 211 determines that learning is to be terminated and the achievement value estimation model learning process ends.

One or more of the following conditions, for example, are set as the condition for terminating learning of the achievement value estimation model.

Predetermined learning period has elapsed

Amount of learnt learning data exceeded predetermined threshold

Estimation accuracy of achievement value estimation model in a case where past learning data was used exceeded predetermined threshold

Change in internal parameter of achievement value estimation model is smaller than predetermined threshold

Note that, in learning of the achievement value estimation model, an achievement vector including the feature amounts of the definitions of respective achievements and the achievement state vectors including the feature amounts of the respective achievement states may be obtained on the basis of the record data of the achievement value in the respective achievement states of the respective achievements, for example, and be used in the learning data.

Specifically, the left side of the following equation (9) represents a record value of an achievement value (for example, a price for an achievement) in each achievement state of each achievement by a matrix. For example, $r_{nm}$ indicates an achievement value for an achievement m in an achievement state n. Moreover, N indicates a total number of achievement states, and M indicates a total number of types of achievements. Note that it is not necessary to obtain the record values of achievement values for all combinations of achievement states and achievements.

[Math. 1]

$$\begin{pmatrix} r_{11} & r_{12} & r_{13} & \cdots & r_{1M} \\ r_{21} & r_{22} & r_{23} & \cdots & r_{2M} \\ & & \vdots & & \\ & & \vdots & & \\ r_{N1} & r_{N2} & r_{N3} & \cdots & r_{NM} \end{pmatrix} \approx \begin{pmatrix} u_1^T \\ u_2^T \\ u_3^T \\ \vdots \\ u_N^T \end{pmatrix} \times \begin{pmatrix} v_1 & v_2 & v_3 & \cdots & v_M \end{pmatrix} \quad \cdots (9)$$

$$r_{nm} \approx u_n^T v_m = \sum_{k=1}^{K} u_{nk} v_{mk} \quad \cdots (10)$$

Here, for example, the achievement value estimation model learning unit 211 decomposes the matrix on the left side of the equation (9) into a potential vector group of an achievement state and a potential vector group of an achievement definition as illustrated on the right side using matrix decomposition.

The potential vector group of an achievement state includes potential vectors $u_1$ to $u_N$ corresponding to respective achievement states, and the potential vector group of an achievement definition includes potential vectors $v_1$ to $v_N$ corresponding to respective achievements. The potential vector $u_n$ includes k elements of $u_{n1}$ to $u_{nk}$, and the potential vector $v_m$ includes k elements of $v_{n1}$ to $v_{nk}$. Moreover, the achievement value $r_{nm}$ in an achievement state n of an achievement m is approximately by inner product of the potential vector $u_n$ and the potential vector $v_m$ as illustrated in the equation (10) .

Note that probabilistic matrix factorization (PMF) or the like, for example, can be used as a matrix decomposition algorithm.

Moreover, the potential vector $v_m$ can be used as the achievement vector of the learning data of the achievement value estimation model, and the potential vector $u_n$ can be used as the achievement state vector.

In this manner, on the basis of the record data of the achievement values in respective achievement states of respective achievements, it is possible to obtain the achievement vector and the achievement state vector for learning data of the achievement value estimation model without requiring manual designing of the feature amounts.

Moreover, by a similar method, on the basis of the record data of the achievement values of respective achievements for respective samples, it is possible to generate the achievement vector and the sample vector for learning data of the achievement value estimation model without requiring manual designing of the feature amounts.

<1-6. Achievement value estimation process>

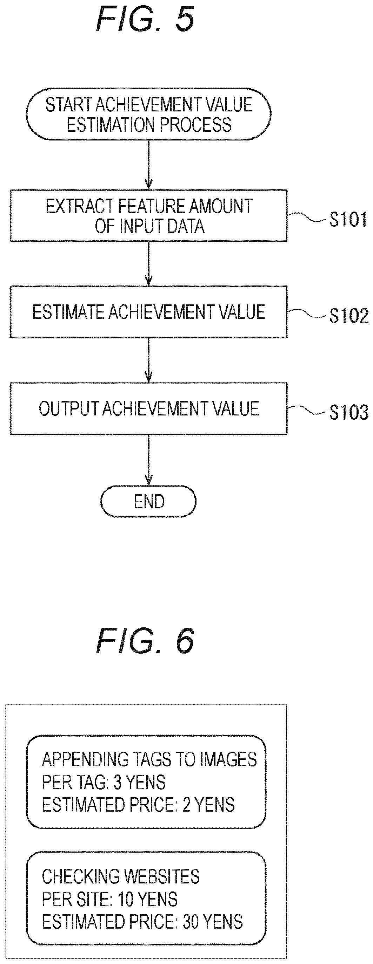

Next, with reference to the flowchart of Fig. 5, an achievement value estimation process executed by the server 11 will be described. Note that this process starts when input data which is a target of which the achievement value is estimated is input to the server 11, for example. The input data includes at least one of an achievement definition, a sample, or an achievement state (data indicating the same).

In step S101, the feature amount extracting unit 201 extracts a feature amount of input data similarly to the process of step S2 in Fig. 4. Moreover, the feature amount extracting unit 201 supplies a feature amount vector including the extracted feature amounts to the achievement value estimating unit 212. This feature amount vector includes at least one of the achievement vector, the sample vector, or the achievement state vector.

In step S102, the achievement value estimating unit 212 estimates an achievement value. Specifically, the achievement value estimating unit 212 estimates the achievement value by applying the feature amount vector supplied from the feature amount extracting unit 201 to the achievement value estimation model stored in the storage unit 108. The achievement value estimating unit 212 supplies the estimation result of the achievement value to the presentation control unit 203 and stores the estimation result in the RAM 103 or the storage unit 108, for example.

InstepS103, the server 11 outputs the achievement value. For example, the presentation control unit 203 supplies the estimation result of the achievement value to the output unit 107 and displays the estimation result on the display of the output unit 107. Moreover, for example, the presentation control unit 203 transmits the estimation result of the achievement value to the client 12 via the communication unit 109 and the network 13 and presents the estimation result of the achievement value to the client 12.

After that, the achievement value estimation process ends.

In this way, it is possible to estimate the achievement value of an achievement of various tasks easily.

For example, it is possible to easily estimate an achievement value for an unknown achievement without past records, an unknown sample, or an unknown achievement state. Moreover, it is possible to estimate an achievement value and estimate an achievement value of each sample or each achievement state without taking a sample and an achievement state into consideration.

Moreover, for example, even in a case where tasks have different contents, if the achievements thereof are the same, these achievements can be estimated as the same value regardless of the contents of the tasks.

<<2. Application example>>

Hereinafter, an application example of the present technology will be described.

For example, the above-described achievement value estimation model can be used for calculating a reward for a task.

Generally, a wage system comes in a time-based wage system and an achievement-based wage system. In a time-based wage system, a reward per unit time is determined and a wage is paid depending on a work hours. For example, wages in a case where the unit time is set to one year, one month, one week, one day, and one hour correspond to an annual wage (an annual salary), a monthly wage, a weekly wage, a daily wage, and an hourly wage. On the other hand, in an achievement-based wage system, a wage is paid depending on an achievement of a job.

Note that a wage system that combines the time-based wage system and the achievement-based wage system is also present. For example, an employee may receive wages partly based on the time-based wage system and partly based on the achievement-based wage system.

Here, for example, in the case of calculating an achievement-based wage, the achievement value estimation model can be used. Specifically, the achievement value estimating unit 212 can calculate an achievement-based wage of each employee by estimating a reward which is an achievement value for each achievement of each employee using the achievement value estimation model and integrating the estimated rewards for the respective employees.

In this way, it is possible to easily and objectively calculate the achievement-based wage of each employee. For example, the similar wage can be set for the similar achievement.

Moreover, since a reward for each achievement can be estimated, the estimation result can be used for evidence for judging the validity of the achievement-based wage, explanation of the details of the achievement-based wage, and the like.

Moreover, for example, the above-described achievement value estimation model can be used for calculating a reward in cloud sourcing. Here, cloud sourcing is a service of collecting task execution operators using the Internet or the like, for example, and placing and receiving orders for tasks.

For example, an orderer who places an order for a task can set a reward for the task ordered appropriately using the achievement value estimation model. For example, the orderer can set an appropriate reward on the basis of the achievement value of the task even if the order was the first order.

Moreover, for example, as illustrated in Fig. 6, on a recruiting screen for cloud sourcing operators or the like, an actual reward for a task and an achievement value of the task estimated using the achievement value estimation model may be presented.

For example, in the example on top of Fig. 6, a reward of 3 yens per tag is presented for a task of "appending tags to image" and an estimated value (estimated price) of an achievement value of the task is displayed as 2 yens. Therefore, in this example, an actual reward is higher than the achievement value of the task. Moreover, for example, in the example at bottom of Fig. 6, a reward of 10 yens per site is presented for a task of "checking websites" and an estimated value (estimated price) of an achievement value of the task is displayed as 30 yens. Therefore, in this example, the actual reward is lower than the achievement value of the task.

In this way, for example, an operator can easily determine whether the presented reward for a task is appropriate or not. On the other hand, it becomes difficult for an orderer to set an inappropriate reward and it is possible to motivate the orderer to set an appropriate reward.

<<3. Modification and the like>>

Hereinafter, a modification and the like of the above-described embodiment of the present technology will be described.

For example, it is possible to estimate achievement values of other achievements using the achievement values of a plurality of achievements. For example, in a case where achievements 1 to 3 are defined as follows, the achievement value estimating unit 212 can calculate a difference between an achievement value of the achievement 2 and an achievement value of the achievement 1 by the following equation (11) and can estimate an achievement value of the achievement 3 which is the difference between the achievement 2 and the achievement 1.

Achievement 1: "image"
Achievement 2: "image to which bird label indicating whether bird is photographed in image or not is appended"
Achievement 3: "bird image indicating whether bird is photographed in image or not"

```
    Achievement value of achievement 3 = Achievement value of achievement
2 - Achievement value of achievement 1 ... (11)
```

Note that the achievement 3 may be an achievement of a task of "appending bird label indicating whether bird is photographed in image or not", for example.

Moreover, the equation (11) can be expressed as the following equation (12) using the above-described equation (1).

```
    Achievement value of achievement 3 = Value of output of task - Value
of input of task ... (12)
```

For example, "image" in the achievement 1 corresponds to an input of a task, and "image to which bird label indicating whether bird is photographed in image or not is appended" in the achievement 2 corresponds to an output of the task.

Moreover, an arbitrary method other than the above-described methods can be used for estimation of the achievement value. For example, achievements may be clustered using a k-mean method or the like in a space including at least one feature amount of an achievement definition, a sample, or an achievement state, and a similar achievement value may be applied to achievements in each cluster. Moreover, for example, the achievement value may be estimated using regression analysis such as a neighborhood method.

Furthermore, for example, all or part of the processes of the server 11 may be executed by the client 12. For example, an achievement value estimation model may be provided from the server 11 to the client 12, and the achievement value may be estimated by the client 12.

Moreover, for example, in a case where an achievement value estimation model is learned or an achievement value is estimated, input data including an achievement vector, a sample vector, and an achievement state vector may be provided to the server 11 and the feature amounts may not be extracted by the server 11.

Furthermore, the application example of the above-described present technology is an example only, and the present technology can be applied to various devices, services, and the like for estimating and using an achievement value, for example.

Moreover, the above-described series of processes may be executed by hardware and may be executed by software.

Note that, in a case where the processes are executed by software, a program executed by a computer (for example, the server 11 and the client 12) may be a program that performs processing in a time-series order according to the procedure described in the present description and may be a program that performs processing in parallel or at necessary timings when called or the like.

Moreover, in the present description, a system means a set of a plurality of constituent elements (devices, modules (components), and the like) regardless of whether all constituent elements are inside the same casing or not. Therefore, the system includes a plurality of devices housed in different casings and connected via a network and one device in which a plurality of modules are accommodated in one casing.

Furthermore, the present technology is not intended to be limited to the above-mentioned embodiments, and various modifications may be made without departing from the scope and spirit of the present technology.

For example, the present technology may include a cloud computing configuration for sharing and processing one function by the cooperation of a plurality of devices via a network.

Moreover, the steps having been described in the above-mentioned flowchart may be executed by one device and may be shared and executed by a plurality of devices.

Furthermore, in a case where one step includes a plurality of processes, the plurality of processes included in one step may be performed by one device and may be shared and performed by a plurality of devices.

Moreover, the effects described in the present specification are examples only and are not limited thereto, and may include other effects.

Furthermore, for example, the present technology can have the following configurations.

(1) An information processing device including:

an estimating unit that estimates an achievement value which is a value of an achievement of a task on the basis of achievement information which is information associated with the achievement of the task.

(2) The information processing device according to (1), in which
the estimating unit estimates the achievement value on the basis of at least one of an achievement feature amount including a feature amount of a definition of an achievement, a sample feature amount including a feature amount of a sample related to a specific achievement, or an achievement state feature amount including a feature amount of an achievement state which is a state in which an achievement is placed.

(3) The information processing device according to (2), in which
the sample feature amount includes at least one of a feature amount of a task processing target which is a processing target of the task or a feature amount of a specific achievement of the task.

(4) The information processing device according to (2) or (3), in which
the estimating unit uses a model for estimating the achievement value on the basis of at least one of the achievement feature amount, the sample feature amount, or the achievement state feature amount.

(5) The information processing device according to (4), further including:
a learning unit that performs learning of the model.

(6) The information processing device according to (5), in which
the learning unit performs learning of the model using the achievement feature amount corresponding to each of achievements obtained from record data of the achievement value in each of the achievement states of each achievement and the achievement state feature amount corresponding to each of the achievement state.

(7) The information processing device according to (5) or (6), in which
the learning unit performs learning of the model using the achievement feature amount corresponding to each of achievements obtained from record data of the achievement value of each of achievements for each of the samples and the sample feature amount corresponding to each of the samples.

(8) The information processing device according to any of (2) to (7), further including:
a feature amount extracting unit that extracts at least one of the achievement feature amount, the sample feature amount, or the achievement state feature amount.

(9) The information processing device according to any of (1) to (8), in which
the estimating unit estimates the achievement value of a third achievement which is a difference between a first achievement and a second achievement by a difference between the achievement value of the first achievement and the achievement value of the second achievement.

(10) The information processing device according to any of (1) to (9), in which
the achievement is one of or a combination of two or more of a label, a comparison result, a listing result, an evaluation result, a retrieval result, a reply, an answer, an arrangement result, a conversion result, a summary result, an association result, an inference result, a generation result, a suggestion result, a plan, a design specification, a test result, and an object.

(11) An information processing method including:
an estimation step of allowing an information processing device to estimate an achievement value which is a value of an achievement of a task on the basis of achievement information which is information associated with an achievement of the task.

(12) A program for causing a computer to execute a process including:
an estimation step of estimating an achievement value which is a value of an achievement of a task on the basis of achievement information which is information associated with an achievement of the task.

REFERENCE SIGNS LIST

| | |
|---|---|
| 1 | Information processing system |
| 11 | Server |
| 12 | Client |
| 101 | CPU |
| 201 | Feature amount extracting unit |
| 202 | Task-related processing unit |
| 203 | Presentation control unit |
| 211 | Achievement value estimation model learning unit |
| 212 | Achievement value estimating unit |

**EP 3 474 213 A1**

**Claims**

1.  An information processing device comprising:
    an estimating unit that estimates an achievement value which is a value of an achievement of a task on the basis of achievement information which is information associated with the achievement of the task.

2.  The information processing device according to claim 1, wherein
    the estimating unit estimates the achievement value on the basis of at least one of an achievement feature amount including a feature amount of a definition of an achievement, a sample feature amount including a feature amount of a sample related to a specific achievement, or an achievement state feature amount including a feature amount of an achievement state which is a state in which an achievement is placed.

3.  The information processing device according to claim 2, wherein
    the sample feature amount includes at least one of a feature amount of a task processing target which is a processing target of the task or a feature amount of a specific achievement of the task.

4.  The information processing device according to claim 2, wherein
    the estimating unit uses a model for estimating the achievement value on the basis of at least one of the achievement feature amount, the sample feature amount, or the achievement state feature amount.

5.  The information processing device according to claim 4, further comprising:
    a learning unit that performs learning of the model.

6.  The information processing device according to claim 5, wherein
    the learning unit performs learning of the model using the achievement feature amount corresponding to each of achievements obtained from record data of the achievement value in each of the achievement states of each achievement and the achievement state feature amount corresponding to each of the achievement state.

7.  The information processing device according to claim 5, wherein
    the learning unit performs learning of the model using the achievement feature amount corresponding to each of achievements obtained from record data of the achievement value of each of achievements for each of the samples and the sample feature amount corresponding to each of the samples.

8.  The information processing device according to claim 2, further comprising:
    a feature amount extracting unit that extracts at least one of the achievement feature amount, the sample feature amount, or the achievement state feature amount.

9.  The information processing device according to claim 1, wherein
    the estimating unit estimates the achievement value of a third achievement which is a difference between a first achievement and a second achievement by a difference between the achievement value of the first achievement and the achievement value of the second achievement.

10. The information processing device according to claim 1, wherein
    the achievement is one of or a combination of two or more of a label, a comparison result, a listing result, an evaluation result, a retrieval result, a reply, an answer, an arrangement result, a conversion result, a summary result, an association result, an inference result, a generation result, a suggestion result, a plan, a design specification, a test result, and an object.

11. An information processing method comprising:
    an estimation step of allowing an information processing device to estimate an achievement value which is a value of an achievement of a task on the basis of achievement information which is information associated with an achievement of the task.

12. A program for causing a computer to execute a process including:
    an estimation step of estimating an achievement value which is a value of an achievement of a task on the basis of achievement information which is information associated with an achievement of the task.

# FIG. 1

## FIG. 2

EP 3 474 213 A1

# FIG. 3

FEATURE AMOUNT EXTRACTING UNIT — 201

TASK-RELATED PROCESSING UNIT — 202

ACHIEVEMENT VALUE ESTIMATION MODEL LEARNING UNIT — 211

ACHIEVEMENT VALUE ESTIMATING UNIT — 212

PRESENTATION CONTROL UNIT — 203

# FIG. 4

```
        ┌──────────────────────────────────┐
        │  START ACHIEVEMENT VALUE ESTIMATION │
        │      MODEL LEARNING PROCESS         │
        └──────────────────────────────────┘
                        │
                        ▼
        ╱────────────────────────────╲  S1        No
        ╲  HAS LEARNING DATA BEEN INPUT? ╱ ──────────►
                        │
                       Yes
                        ▼
        ┌──────────────────────────────┐
        │   EXTRACT FEATURE AMOUNT OF   │  S2
        │  INPUT DATA OF LEARNING DATA  │
        └──────────────────────────────┘
                        │
                        ▼
        ┌──────────────────────────────┐
        │        UPDATE MODEL           │  S3
        └──────────────────────────────┘
                        │
                        ▼
  Yes   ╱────────────────────────────╲  S4
◄────── ╲     CONTINUE LEARNING?       ╱
                        │
                       No
                        ▼
                   ┌─────────┐
                   │   END   │
                   └─────────┘
```

# FIG. 5

```
        ┌──────────────────────────────┐
        │  START ACHIEVEMENT VALUE     │
        │    ESTIMATION PROCESS        │
        └──────────────────────────────┘
                      │
                      ▼
        ┌──────────────────────────────┐
        │   EXTRACT FEATURE AMOUNT     │──── S101
        │      OF INPUT DATA           │
        └──────────────────────────────┘
                      │
                      ▼
        ┌──────────────────────────────┐
        │  ESTIMATE ACHIEVEMENT VALUE  │──── S102
        └──────────────────────────────┘
                      │
                      ▼
        ┌──────────────────────────────┐
        │  OUTPUT ACHIEVEMENT VALUE    │──── S103
        └──────────────────────────────┘
                      │
                      ▼
                ┌──────────┐
                │   END    │
                └──────────┘
```

# FIG. 6

```
┌────────────────────────────────────────┐
│  ┌──────────────────────────────────┐  │
│  │ APPENDING TAGS TO IMAGES         │  │
│  │ PER TAG: 3 YENS                  │  │
│  │ ESTIMATED PRICE: 2 YENS          │  │
│  └──────────────────────────────────┘  │
│                                        │
│  ┌──────────────────────────────────┐  │
│  │ CHECKING WEBSITES                │  │
│  │ PER SITE: 10 YENS                │  │
│  │ ESTIMATED PRICE: 30 YENS         │  │
│  └──────────────────────────────────┘  │
└────────────────────────────────────────┘
```

**EP 3 474 213 A1**

<table>
<tr><td colspan="2" align="center">INTERNATIONAL SEARCH REPORT</td><td colspan="2">International application No.<br>PCT/JP2017/020397</td></tr>
</table>

A. CLASSIFICATION OF SUBJECT MATTER
*G06Q50/10(2012.01)i*

According to International Patent Classification (IPC) or to both national classification and IPC

B. FIELDS SEARCHED

Minimum documentation searched (classification system followed by classification symbols)
G06Q50/10

Documentation searched other than minimum documentation to the extent that such documents are included in the fields searched

| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-41729 A (Bijitekku Kabushiki Kaisha),<br>08 February 2002 (08.02.2002),<br>claim 1; paragraphs [0063], [0082]<br>& US 2002/0019766 A1<br>claim 1; paragraphs [0071], [0103]<br>& EP 1178425 A2 | 1-3,8,10-12<br>4-7,9 |
| Y | JP 2014-21757 A (Nippon Telegraph and<br>Telephone Corp.),<br>03 February 2014 (03.02.2014),<br>claim 1<br>(Family: none) | 4-7 |
| Y | WO 2013/018160 A1 (The Aqua Enterprise Co.),<br>07 February 2013 (07.02.2013),<br>paragraph [0004]<br>(Family: none) | 9 |

☐ Further documents are listed in the continuation of Box C. ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>23 June 2017 (23.06.17) | Date of mailing of the international search report<br>04 July 2017 (04.07.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010086928 A